Europäisches Patentamt

European Patent Office

Office européen des brevets

(11) Numéro de publication: **0 392 908**
**A1**

## (12) DEMANDE DE BREVET EUROPEEN

(21) Numéro de dépôt: 90400952.9

(22) Date de dépôt: 06.04.90

(51) Int. Cl.⁵: **F16L 37/12**

(30) Priorité: **13.04.89 FR 8904922**

(43) Date de publication de la demande:
**17.10.90 Bulletin 90/42**

(84) Etats contractants désignés:
**DE ES IT**

(71) Demandeur: **SOCIETE INDUSTRIELLE DE BOULAY, S.I.B.-A.D.R.**
**50, rue du Capitaine Maillard, BP No. 40**
**F-57220 Boulay(FR)**

(72) Inventeur: **Bourson, Pierre-Jean**
**50, rue du Capitaine Maillard, BP 40**
**F-57220 Boulay(FR)**

(74) Mandataire: **Armengaud, Alain**
**Cabinet ARMENGAUD AINE 3, Avenue Bugeaud**
**F-75116 Paris(FR)**

(54) **Raccord pour tuyauteries.**

(57) Raccord pour tuyauterie lisse notamment pour l'industrie automobile, caractérisé en ce qu'il est constitué d'un corps (10) en matériau synthétique prolongé par un moyen (12) assurant le raccordement soit sur une conduite soit directement sur un réservoir ou similaire et muni d'un alésage axial (16) pourvu d'une portion de tubulure (14) formant élément de liaison mâle pour la tuyauterie à raccorder (18) et sur laquelle s'engage ladite tuyauterie, en ce que ladite portion de tubulure comporte une partie inférieure (14') dont la surface extérieure est tronconique pour assurer le maintien de ladite tuyauterie (18) dont l'extrémité vient en butée sur le fond (24) dudit alésage et en ce que ledit alésage axial (16) débouche de chaque côté dudit corps selon deux fenêtres latérales (20, 20') dans lesquelles viennent se positionner des pattes (22, 22') articulées sur ledit corps et conçues de façon à assurer le blocage de ladite tuyauterie (18) après son raccordement sur ladite portion de tubulure (14), lesdites pattes de blocage venant de moulage avec ledit corps, de manière à obtenir un raccord monobloc.

FIG. 1

EP 0 392 908 A1

Xerox Copy Centre

La présente invention concerne un système de raccord pour tuyauteries et tubulures lisses destiné plus particulièrement à l'industrie automobile. On sait que dans cette industrie on utilise de nombreux raccords, un exemple d'une telle utilisation résidant dans la liaison entre la conduite venant d'un réservoir de carburant et le système d'alimentation ou d'injection du carburant dans les cylindres du moteur.

Ces systèmes de raccord doivent répondre à un certain nombre d'exigences impératives parmi lesquelles on peut citer :
- une très grande fiabilité pour éviter toute cause de panne résultant de la défectuosité de tels raccords ;
- une grande aptitude au montage et au démontage rapides de manière à faciliter les opérations d'entretien;
- une excellente étanchéité en particulier tant à l'eau qu'à l'air, de façon à éviter d'une part toute introduction d'air dans les tubulures ainsi raccordées, cette introduction d'air se traduisant par une panne d'alimentation du moteur lorsque les tubulures sont celles du circuit d'alimentation en carburant et d'autre part toute introduction d'eau dans les tubulures laquelle est une cause de gel lors des basses températures ce qui se traduit également par une panne d'alimentation en carburant du moteur ;
- un faible prix de revient.

On connait (EP-A-00 73 892 et EP-A-00 86 900) des systèmes de raccords pour tubes annelés qui sont réalisés sous la forme d'un corps en matière plastique pourvu d'un alésage axial destiné à recevoir les tubes à raccorder et d'un organe de verrouillage mobile venant en prise sur les anneaux des tubes, afin d'assurer leur verrouillage. Ces raccords connus, outre leur application spécifique les rendant impropres à une utilisation sur tubes lisses, ne répondent pas aux exigences mentionnées ci-dessus.

Il existe par ailleurs à l'heure actuelle des systèmes de raccord, commercialisés notamment pour les applications mentionnées ci-dessus et qui sont réalisés en matières synthétique notamment en "Rilsan". Malheureusement, ces systèmes de raccord connus ne répondent pas à toutes les exigences mentionnées ci-dessus. Compte-tenu des besoins importants, notamment de l'industrie automobile, la présente titulaire a mis au point un nouveau type de raccord objet de la présente invention et qui répond à l'ensemble des prescriptions définies ci-dessus.

En conséquence, la présente invention a pour objet un raccord pour tuyauterie, notamment pour l'industrie automobile, caractérisé en ce qu'il est constitué d'un corps en matériau synthétique prolongé par un moyen assurant le raccordement soit sur une conduite soit directement sur un réservoir ou similaire et muni d'un alésage axial pourvu d'une portion de tubulure formant élément de liaison mâle pour la tuyauterie à raccorder et sur laquelle s'engage ladite tuyauterie, en ce que ladite portion de tubulure comporte une partie inférieure dont la surface extérieure est tronconique pour assurer le maintien de ladite tuyauterie dont l'extrémité vient en butée sur le fond dudit alésage et en ce que ledit alésage axial débouche de chaque côté dudit corps selon deux fenêtres latérales dans lesquelles viennent se positionner des pattes articulées sur ledit corps et conçues de façon à assurer le blocage de ladite tuyauterie après son raccordement sur ladite portion de tubulure, lesdites pattes de blocage venant de moulage avec ledit corps, de manière à obtenir un raccord monobloc.

Selon une caractéristique de cette invention les pattes de blocage sont articulées sur le corps par l'intermédiaire de languettes de faible épaisseur formant charnières, venues de moulage avec l'ensemble du raccord. Ces pattes de blocage comportent des évidements en forme de berceaux cylindriques venant s'appliquer contre les surfaces en regard de la tuyauterie à raccorder lorsque les pattes viennent se positionner dans les fenêtres respectives prévues à cet effet dans le corps du raccord, les pattes étant en outre munies de moyens de verrouillage qui coopèrent avec des moyens correspondants prévus sur le corps du raccord.

Selon un exemple de réalisation de l'invention, les moyens de verrouillage prévus sur les pattes de blocage sont réalisés sous la forme d'un système de clipsage dont les éléments correspondants sont respectivement prévus à l'extrémité de chaque partie de blocage et sur le corps.

D'autres caractéristiques et avantages de la présente invention ressortiront de la description faite ci-après en référence aux dessins annexés qui en illustrent un exemple de réalisation dépourvu de tout caractère limitatif. Sur les dessins :

la figure 1 est une vue en perspective du système de raccord selon la présente invention avec ses pattes de blocage en position ouverte ;

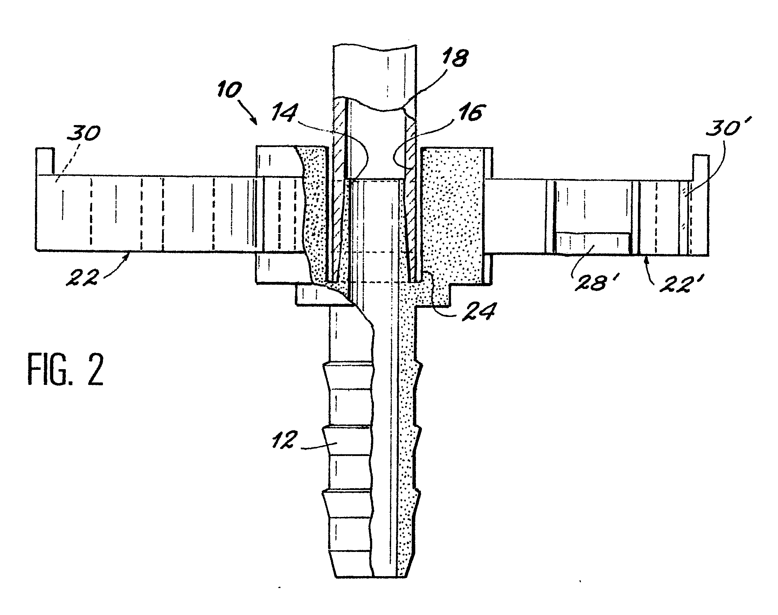

- la figure 2 est une vue en plan avec coupe horizontale du corps du raccord en partie droite et ;
- la figure 3 est une vue en bout du système de raccord illustré par les figures 1 et 2, la partie de droite de cette figure étant représentée en coupe verticale.

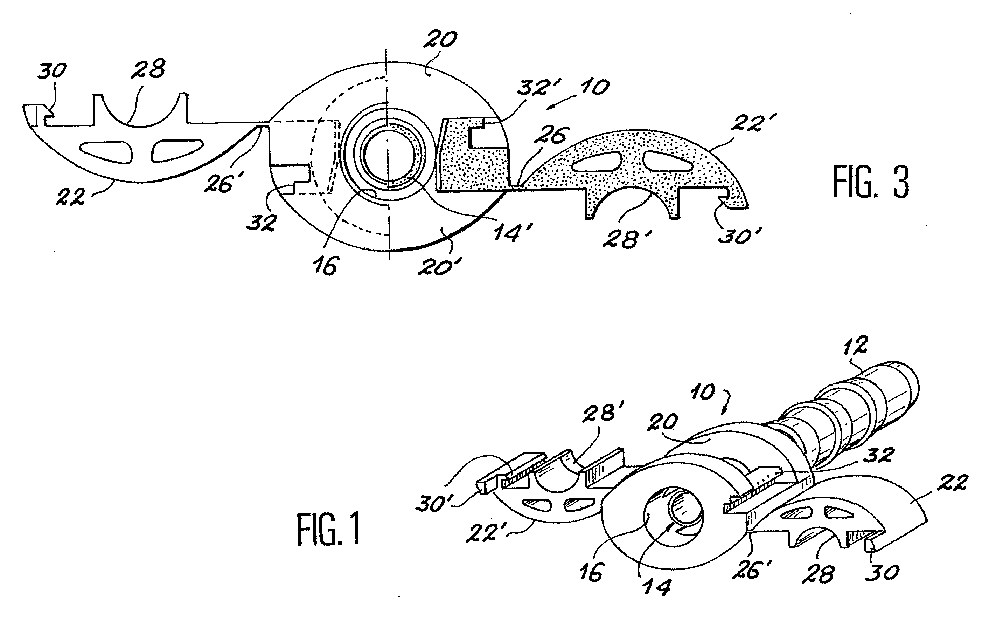

En se référant aux dessins, on voit que le raccord selon la présente invention comprend essentiellement un corps 10 ayant sensiblement la forme d'un cylindre elliptique et qui est prolongé par un moyen 12 assurant le raccordement sur une conduite (non représentée sur le dessin). Cet ensemble est réalisé en une matière plastique, notamment une résine systhétique par exemple en "Rislan". Le corps est muni d'un alésage axial 16 qui comporte une portion de tubulure 14 qui, ainsi qu'on le verra ci-après, constitue un élément de liaison mâle pour la tuyauterie lisse 18 devant être raccordée sur la conduite montée sur le raccord par l'intermédiaire du moyen 12. Cet alésage axial 16 débouche de chaque côté du corps (figure 1) par l'intermédiaire de deux fenêtres latérales 20, 20'.

Dans cet exemple de réalisation, la portion de tubulure 14 sur laquelle vient s'engager pour son raccordement la tuyauterie lisse 18 présente une partie inférieure 14' dont la surface extérieure est de forme tronconique. Comme on le verra ci-après ce profil de la portion de tubulure 14 assure le maintien de la tuyauterie 18 sur le système de raccord ainsi que l'étanchéité.

Le corps 10 est par ailleurs muni de deux pattes 22, 22', qui sont conçues et réalisées de manière à assurer le blocage de la tuyauterie 18 après son raccordement sur la portion de tubulure 14, ces pattes de blocage qui viennent de moulage avec le corps 10 venant se positionner dans les fenêtres latérales 20, 20' comme on le décrira ci-après.

Comme on peut le voir sur le dessin et plus particulièrement sur la figure 3 chaque patte de blocage telle que 22, 22' est articulée sur le corps 10 à l'aide d'une languette de faible épaisseur formant charnière 26, 26' respectivement, ces charnières venant de moulage avec l'ensemble du raccord.

Chaque patte de blocage est munie d'un évidement qui dans cet exemple de réalisation présente la forme d'un berceau cylindrique 28, 28' respectivement et qui est destiné à venir s'appliquer contre la surface correspondante de la tuyauterie 18 à raccorder, lorsque les pattes de blocage 22, 22' sont positionnées dans leur fenêtre respective 20, 20'. Par ailleurs, lesdites pattes de blocage sont munies de moyens de verrouillage qui sont conçus de façon à coopérer avec des moyens correspondants prévus sur le corps du raccord 10. Dans cet exemple de réalisation qui n'a bien entendu aucun caractère limitatif les moyens de verrouillage sont réalisés sous la forme d'un système de clipsage dont les éléments correspondants sont prévus d'une part à l'extrémité de chaque patte de blocage 22, 22' (éléments 30, 30') et d'autre part sur le corps 10 (éléments 32, 32').

La mise en oeuvre du système de raccord décrit ci-dessus s'effectue de la façon suivante :
- l'utilisateur met en place le corps de raccord 10 sur la conduite à raccorder en introduisant l'extrémité 12 du corps du raccord dans l'alésage interne de cette conduite, ou en fixant directement le raccord par exemple sur un réservoir, l'extrémité 12 en queue de sapin de l'exemple de réalisation illustré par les dessins étant alors remplacée par une queue filetée que l'on raccorde directement sur le réservoir. Ensuite, il introduit la tuyauterie 18 à raccorder dans l'alésage axial 16 du corps 10 dans l'espace compris entre la portion de tubulure 14 et la surface cylindrique interne de cet alésage. La tuyauterie 18 vient donc s'introduire sur la portion de tubulure formant élément de liaison mâle 14 en s'appliquant contre la surface extérieure de cet élément 14. La forme tronconique de la partie inférieure 14' de cette portion de tubulure 14 permet d'obtenir un blocage de la tuyauterie 18 dans le corps du raccord, lorsque l'on introduit à force la tuyauterie 18 sur la portion de tubulure 14 jusqu'à ce que l'extrimité de la conduite 18 vienne en butée contre le fond 24 de l'alésage axial 16 ;
- après cette mise en place de la tuyauterie 18 sur le corps du raccord, l'utilisateur rabat chaque patte de blocage 22, 22' vers le corps 10 par pivotement autour des languettes 26, 26' formant chanières. A l'issue de cette opération, chaque patte de blocage vient se positionner dans la fenêtre latérale correspondante 20, 20' prévue dans le corps 10 du raccord, son évidement en forme de berceau cylindrique 28, 28' venant prendre appui contre les surfaces opposées de la tuyauterie 18 et, finalement le système de clipsage 30, 30'-32, 32' assure le verrouillage des pattes de blocage 22, 22' dans leur logement du corps 10, ce qui complète le blocage de la tuyauterie 18 dans le raccord.

La description faite ci-dessus du système de raccord selon l'invention et de son mode de mise en oeuvre montre clairement que l'invention permet de réaliser un raccord monobloc, très facile à manipuler et à mettre en oeuvre et assurant une connection rapide, efficace, fiable et étanche des deux conduites lisses à raccorder, où d'une conduite et un réservoir, ou similaire dans le cas précisé ci-dessus où le raccord est directement monté par vissage sur un tel réservoir ou équivalent. En effet, on remarquera de la lecture de la description qui précède que la tuyauterie 18 est maintenue sur le corps 10 par son blocage sur la portion de tubulure 14 dans l'alésage 16 du corps 10, son extrémité venant en butée au fond 24 de cet alésage axial, ce qui assure l'étanchéité du raccord tant vis-à-vis de l'air que vis-à-vis de l'eau, les pattes 22, 22' permettant d'obtenir par ailleurs le maintien de cette étanchéité en bloquant tout déplacement relatif de la tuyauterie 18 par rapport au coprs 10 du raccord.

En outre, le raccord est aisément démontable ce qui facilite les opérations d'entretien, étant donné que les pattes de blocage 22, 22' peuvent être déverrouillées du coprs 10, la tuyauterie 18 étant ensuite détachée du raccord par traction.

## Revendications

1. Raccord pour tuyauterie lisse notamment pour l'industrie automobile, caractérisé en ce qu'il est constitué d'un corps (10) en·matériau synthétique prolongé par un moyen (12) assurant le raccordement soit sur une conduite soit directement sur un réservoir ou similaire et muni d'un alésage axial (16) pourvu d'une portion de tubulure (14) formant élément de liaison mâle pour la tuyauterie à raccorder (18) et sur laquelle s'engage ladite tuyauterie, en ce que ladite portion de tubulure comporte une partie inférieure (14′) dont la surface extérieure est tronconique pour assurer le maintien de ladite tuyauterie (18) dont l'extrémité vient en butée sur le fond (24) dudit alésage et en ce que ledit alésage axial (16) débouche de chaque côté dudit corps selon deux fenêtres latérales (20, 20′) dans lesquelles viennent se positionner des pattes (22, 22′) articulées sur ledit corps et conçues de façon à assurer le blocage de ladite tuyauterie (18) après son raccordement sur ladite portion de tubulure (14), lesdites pattes de blocage venant de moulage avec ledit corps, de manière à obtenir un raccord monobloc.

2. Raccord selon la revendication 1, caractérisé en ce que les pattes de blocage (22, 22′) sont articulées sur le corps (10) par des languettes de faible épaisseur formant charnières (26, 26′), venues de moulage avec du raccord, lesdites pattes de blocage comportant des évidements en forme de berceaux cylindriques (28, 28′) venant s'appliquer contre les surfaces de la tuyauterie à raccorder (18), lorsque les pattes sont positionnées dans leurs fenêtres respectives (20, 20′) lesdites pattes de blocage étant en outre munies de moyens de verrouillage

3. Raccord selon la revendication 2, caractérisé en ce que les moyens de verrouillage (30, 30′-32, 32′) sont réalisés sous la forme d'un système de clipsage dont les éléments correspondants sont respectivement prévus à l'extrémité de chaque patte de blocage et sur le corps.

4. Raccord selon l'une quelconque des revendications précédentes, caractérisé en ce qu'il est réalisé en matière plastique, notamment en résine synthétique, et en ce que, à l'état fermé, c'est-à-dire avec les pattes de blocage verrouillées sur le corps, il présente la forme d'un cylindre elliptique.

FIG. 3

FIG.1

FIG. 2

EP 0 392 908 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 086 900   (GROSSAUER) <br> * Fig. * | 1 | F 16 L   37/12 |
| A | | 2,3,4 | |
| | --- | | |
| Y | FR-A-2 528 533   (DE VIENNE) <br> * Fig. * | 1 | |
| | --- | | |
| A | EP-A-0 073 892   (GROSSAUER) <br> * Page 5, ligne 32 - page 6, ligne 17; figures 4,7 * | 1,3,4 | |
| | --- | | |
| A | US-A-4 795 197   (KAMINSKI) <br> * Fig. * | 1,3,4 | |
| | ----- | | |

**DOMAINES TECHNIQUES RECHERCHES (Int. Cl.5)**

F 16 L

Le présent rapport a été établi pour toutes les revendications

| Lieu de la recherche | Date d'achèvement de la recherche | Examinateur |
|---|---|---|
| LA HAYE | 18-06-1990 | HUBEAU M.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...............................................................................
& : membre de la même famille, document correspondant

EPO FORM 1503 03.82 (P0402)